(19) Europäisches Patentamt
European Patent Office
Office européen des brevets

(11) **EP 3 931 991 B1**

(12) **FASCICULE DE BREVET EUROPEEN**

(45) Date de publication et mention
de la délivrance du brevet:
**11.10.2023 Bulletin 2023/41**

(21) Numéro de dépôt: **20714267.0**

(22) Date de dépôt: **24.02.2020**

(51) Classification Internationale des Brevets (IPC):
**H04J 13/00** *(2011.01)*

(52) Classification Coopérative des Brevets (CPC):
**H04J 13/0003; H04J 13/0062; H04J 13/0074;**
Y02D 30/70

(86) Numéro de dépôt international:
**PCT/FR2020/050345**

(87) Numéro de publication internationale:
**WO 2020/174167 (03.09.2020 Gazette 2020/36)**

(54) **MÉTHODE ET DISPOSITIF DE MODULATION PAR SÉQUENCES DE ZADOFF-CHU**

VERFAHREN UND VORRICHTUNG ZUR MODULIERUNG MIT ZADOFF-CHU-SEQUENZEN

METHOD AND DEVICE FOR MODULATING WITH ZADOFF-CHU SEQUENCES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.02.2019 FR 1902035**

(43) Date de publication de la demande:
**05.01.2022 Bulletin 2022/01**

(73) Titulaire: **Ternwaves**
**06400 Cannes (FR)**

(72) Inventeur: **CANONICI, Jean**
**06400 CANNES (FR)**

(74) Mandataire: **Brevalex**
**56, Boulevard de l'Embouchure**
**B.P. 27519**
**31075 Toulouse Cedex 2 (FR)**

(56) Documents cités:
**US-A1- 2012 207 118**

• **KRENZ RAFAL ET AL: "Hybrid DS/FH spread
spectrum data transmission system for
telemetry", 2016 10TH INTERNATIONAL
SYMPOSIUM ON COMMUNICATION SYSTEMS,
NETWORKS AND DIGITAL SIGNAL
PROCESSING (CSNDSP), IEEE, 20 juillet 2016
(2016-07-20), pages 1-5, XP032968135, DOI:
10.1109/CSNDSP.2016.7573935**

## Description

### Domaine technique

La présente invention concerne de manière générale le domaine le domaine des télécommunications numériques et plus particulièrement celles qui utilisent des techniques d'étalement de spectre. Elle trouve notamment à s'appliquer dans les systèmes de communications sans fil et dans l'Internet des Objets ou IoT (*Internet of Things*).

### Etat de la technique antérieure

L'apparition de technologies radio pervasives et à faible débit, adaptées à des objets autonomes et à faible consommation d'énergie, a permis récemment le développement de l'Internet des objets (IoT). Les systèmes de communication sans fil d'un réseau IoT doivent obéir à plusieurs contraintes.

Tout d'abord, le récepteur d'un objet connecté doit présenter une sensibilité élevée en raison du faible nombre de stations de base déployées et donc de la taille importante de leurs zones de couverture.

Ensuite, l'émetteur/récepteur d'un objet connecté doit être particulièrement simple et économe en énergie pour permettre d'atteindre des durées d'autonomie de plusieurs années.

Enfin, le système d'accès radio doit être évolutif dans la mesure où une station de base (encore dénommée passerelle IoT) doit pouvoir servir un grand nombre d'objets connectés.

L'Internet des Objets recouvre actuellement une grande diversité de réseaux.

Certains d'entre eux (LTE-M, NB-IoT) utilisent des technologies issues des infrastructures cellulaires existantes. Celles-ci s'avèrent toutefois souvent trop complexes ou trop consommatrices en énergie pour les applications courantes.

D'autres font appel à des technologies spécifiques voire propriétaires, tels que LoRa utilisant une modulation par étalement de spectre ou CSS (*Chirped Spread Spectrum*) et SigFox utilisant une modulation à bande très étroite ou UNB (*Ultra Narrow Bond*). Ces technologies sont peu gourmandes en énergie et permettent d'atteindre des seuils de réception très bas, et donc une couverture très large.

Ces technologies spécifiques présentent cependant des limitations en termes de capacité, c'est-à-dire de nombre d'utilisateurs pouvant être servis simultanément dans une même zone de couverture, en raison de la dégradation du rapport signal sur bruit plus interférence affectant les communications. En particulier, le nombre élevé de collisions non résolues entre signaux CSS dans un système LoRa, même lorsque différents facteurs d'étalement spectral (SFs) sont utilisés, constitue un frein au déploiement de réseaux LPWAN de grande taille basés sur cette technologie voire au déploiement de réseaux par différents opérateurs. On trouvera notamment une discussion sur ces limitations dans l'article de D. Croce et al. intitulé « Impact of LoRa imperfect orthogonality : analysis of link-level performance » publié dans IEEE Communication Letters, Vol. 22, No. 4, avril 2018, pp. 796-799.

L'article de R. Krenz et al. intitulé "Hybrid DS/FH spread spectrum data transmission system for telemetry" publié dans Proc of 10th Int'l Symposium on communication systems, networks and digital signal processing (CSNDSP), IEEE 20 juillet 2016, pages 1-5 ainsi que la demande de brevet US-A-2012/0207118 décrivent une méthode de modulation faisant appel à des séquences de Zadoff-Chu avec des décalages cycliques de phase représentant les symboles à transmettre.

Le but de la présente invention est par conséquent de proposer une méthode de modulation (et un modulateur associé) qui soit particulièrement adaptée aux contraintes des réseaux IoT et qui offre une plus grande robustesse aux interférences entre communications. Un autre but de la présente invention est de proposer une méthode de démodulation correspondante (ainsi qu'un démodulateur associé). Enfin, il est également proposé une méthode de transmission de données mettant à profit la méthode de modulation en question pour réduire les interférences entre communications de différents utilisateurs.

### Présentation de l'invention

La présente invention est définie par une méthode de modulation telle que revendiquée en revendication 1.

L'invention concerne encore un dispositif de modulation tel que revendiqué en revendication indépendante 10.

L'invention concerne en outre une méthode de démodulation telle que revendiquée en revendication indépendante 11.

L'invention concerne aussi un dispositif de démodulation tel que revendiqué dans la revendication indépendante 12 ou 13.

L'invention concerne enfin un système émetteur/ récepteur comprenant un dispositif de modulation et au moins un dispositif de démodulation, tels que définis précédemment.

Des modes avantageux de réalisation de l'invention sont donnés dans les revendications dépendantes.

**Brève description des figures**

D'autres caractéristiques et avantages de l'invention apparaîtront à la lecture d'un mode de réalisation préférentiel de l'invention, décrit en référence aux figures jointes parmi lesquelles :

[Fig. 1] représente de manière schématique un dispositif de modulation selon un mode de réalisation de l'invention ;

[Fig. 2A] et [Fig. 2B] représentent respectivement un exemple de séquence de Zadoff-Chu de base et un exemple de séquence de Zadoff-Chu modulée ;

[Fig. 3A], [Fig. 3B] et [Fig. 3C] représentent respectivement une matrice de pics de corrélation cyclique pour trois exemples de familles de séquences de Zadoff-Chu ;

[Fig. 4] représente de manière schématique une trame de transmission utilisant la méthode de modulation selon un mode de réalisation de l'invention ;

[Fig. 5] représente de manière schématique une séquence de symboles pilotes multipliés par des éléments d'un code de couverture ;

[Fig. 6] représente de manière schématique un dispositif de démodulation selon un premier mode de réalisation de l'invention ;

[Fig. 7] représente de manière schématique un dispositif de démodulation selon un second mode de réalisation de l'invention ;

[Fig. 8] représente un dispositif de synchronisation par détection de préambule pouvant être utilisé conjointement avec un dispositif de démodulation selon un mode de réalisation de l'invention ;

[Fig. 9] représente de manière schématique un premier émetteur/récepteur utilisant un dispositif de modulation et un dispositif de démodulation selon un mode de réalisation de l'invention ;

[Fig. 10] représente de manière schématique un modulateur polaire utilisable dans un second émetteur selon un mode de réalisation de l'invention.

**Description des modes de réalisation**

L'idée à la base de la présente invention est d'effectuer une modulation K-aire à signal en modulant la fréquence d'offset d'une séquence de Zadoff-Chu, la séparation entre différentes communications, synchrones ou non, montantes ou descendantes, étant obtenue par le choix de racines différentes.

On rappelle tout d'abord qu'une séquence de Zadoff-Chu de racine $r$, de longueur $N$ et d'offset de fréquence $q$ est définie par la séquence d'éléments complexes :

$$ZC_N^{r,q}(k) = e^{-j\frac{\pi}{N}r(k+1+2q)k} \text{ , } k = 0,...,N-1 \text{ si } N \text{ est impair} \tag{1}$$

$$ZC_N^{r,q}(k) = e^{-j\frac{\pi}{N}r(k+2q)k} \text{ , } k = 0,...,N-1 \text{ si } N \text{ est pair} \tag{2}$$

où $N$ est un entier strictement positif, $q$ est un entier relatif, $0 < r < N$ et $r,N$ sont premiers entre eux. On pourra trouver une introduction aux séquences de Zadoff-Chu dans l'article de D.C. Chu intitulé « Polyphase codes with good correlation properties », IEEE Trans. Inform. Theory, vol. IT-18, pp. 531-532, Juillet 1972.

Si l'on considère les phases des éléments successifs d'une séquence de Zadoff-Chu, on voit qu'elles comportent une composante linéaire ainsi qu'une composante quadratique dépendant de l'indice temporel $k$. La composante linéaire correspond à un offset de fréquence $-q\frac{\cdot}{N}f_s$ où $f_s$ est la fréquence à laquelle sont générés les éléments de la séquence et la composante quadratique correspond à une variation linéaire de la fréquence instantanée avec une excursion de $-rf_s$ sur la longueur de la séquence.

Les séquences de Zadoff-Chu (ZC) possèdent des caractéristiques très intéressantes pour les systèmes de communication. En premier lieu, elles présentent une amplitude constante (tous les éléments d'une séquence ZC appartenant au cercle unité), donnant lieu à des signaux modulés de faible PAPR. Ensuite, l'autocorrélation périodique d'une séquence ZC est parfaite au sens où elle est nulle pour tout décalage non nul (en d'autres termes, la fonction d'autocorrélation périodique d'une séquence ZC est un peigne de Dirac de période $N$). Enfin, l'inter-corrélation périodique de deux séquences de ZC de même longueur $N$ impaire et de racines $r,u$ distinctes avec $|r-u|$ premier avec $N$, est une fonction périodique dont le module est borné par $\sqrt{N}$. Il a par ailleurs été démontré dans l'article de D.V. Sarwate intitulé « Bounds on crosscorrelation and autocorrelation of sequences », publié dans IEEE Trans. on Information Theory , Vol. IT-25, No. 6, Nov. 79, pp. 720-724 que cette borne sur la fonction d'inter-corrélation périodique était optimale pour une séquence ayant une fonction d'autocorrélation périodique parfaite. Autrement dit, il n'existe pas de séquences meilleures que les séquences de Zadoff-Chu en termes de propriétés d'autocorrélation et d'inter-corrélation.

De manière originale, il est proposé de moduler l'offset de fréquence d'une séquence de Zadoff-Chu pour transmettre un mot de $K \leq \log_2 N$ bits. Il convient de noter que l'offset de fréquence d'une séquence ZC est généralement pris nul dans l'art antérieur, notamment lorsque celle-ci est utilisée à des fins de synchronisation, comme c'est le cas dans la génération de préambules du système LTE (cf. 3GPP TS 36.211, 9 5.7.2 intitulé « preamble sequence génération »).

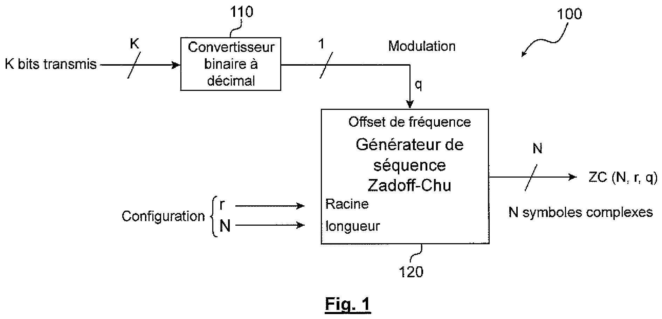

La Fig. 1 représente de manière schématique un dispositif de modulation selon un premier mode de réalisation de l'invention.

Le dispositif de modulation, 100, comprend un convertisseur binaire à décimal ou BDC (*Binary to Decimal Converter*), 110, convertissant un mot de $K$ bits à transmettre, $\alpha_0, .., \alpha_{K-1}$ (où $\alpha_0$ est le LSB et $\alpha_{K-1}$ est le MSB) en une valeur entière

$$q = \sum_{k=0}^{K-1} \alpha_k 2^k$$

. Cette valeur entière est fournie comme valeur d'offset de fréquence à un générateur de séquence de Zadoff-Chu, 120.

Le mot à transmettre peut résulter d'un codage canal de symboles d'information, le cas échéant après que ceux-ci aient été entrelacés. Alternativement, le mot à transmettre peut être un symbole pilote pour un canal de transmission.

Le mot à transmettre peut aussi résulter d'un codage de Gray de symboles d'information. On rappelle que, selon ce codage, deux mots binaires successifs produisent des mots de code ne différant que d'un bit.

Le générateur 120 reçoit en outre comme paramètres d'entrée la racine $r$ et la longueur $N$ de la séquence à générer. Les paramètres $r$ et $N$ peuvent être fournis par un ordonnanceur de ressources de transmission comme précisé plus loin.

Les éléments complexes de la séquence de Zadoff-Chu $ZC_N^{r,q}$ générée par le générateur 120, sont ensuite utilisés pour moduler une porteuse (RF ou IF) de manière connue en soi.

Il est important de noter que dans tous les cas, la séquence d'élément complexes en sortie du modulateur est une séquence de Zadoff-Chu telle que définie plus haut. Il n'est en particulier pas nécessaire d'effectuer une quelconque correction de phase en sortie du générateur 120 et la structure du modulateur est donc particulièrement simple.

Comme on l'a vu plus haut, les entiers $r$ et $N$ sont choisis premiers entre eux.

Selon une première variante, pour respecter cette contrainte, le nombre $N$ est choisi premier. Dans ce dernier cas, l'interférence entre deux communications de même longueur $N$, mais de racines distinctes $r, u$ sera bornée par une même valeur, proportionnelle à $\sqrt{N}$.

De préférence, toutefois, pour des raisons de facilité d'implémentation, la séquence $ZC_N^{r,q}$ générée par le générateur pourra être tronquée à une longueur $2^{K'} < N$ avec $K' \geq K$, en particulier elle pourra être tronquée à la longueur $2^K$ pour obtenir un débit optimal.

Selon une seconde variante avantageuse, pour des raisons de simplicité d'implémentation précédemment indiquées, le nombre $N$ sera choisi égal à une puissance de 2, par exemple $N = 2^K$, la racine $r$ étant alors impaire, de manière à ce que $r$ et $N$ soient premiers entre eux.

En outre, les racines des séquences de ZC seront choisies strictement supérieures à 1 ( $r$>1). On remarque que, dans ce cas, la variation de phase pour une séquence de ZC non modulée (c'est-à-dire avec $q = 0$) présente au moins un repliement entre éléments successifs de la séquence, en d'autres termes la fréquence instantanée présente au moins une discontinuité sur la longueur de la séquence. En effet, la rotation de phase entre deux éléments successifs

peut s'écrire :

$$\varphi(k+1)-\varphi(k)=-\frac{2\pi}{N}r(k+1) \quad \text{si} \quad N \text{ est impair} \tag{3-1}$$

$$\varphi(k+1)-\varphi(k)=-\frac{2\pi}{N}r(k+\frac{1}{2}) \quad \text{si} \quad N \text{ est pair} \tag{3-2}$$

Ainsi, si $r > 1$, la rotation de phase en fin de séquence peut excéder $2\pi$.

De manière équivalente, la fréquence instantanée peut s'exprimer sous la forme :

$$f(k)=\frac{1}{2\pi}\frac{d\varphi}{dk}=-\frac{r}{N}.k \tag{4}$$

et, si r > 1, la fréquence instantanée peut excéder la cadence A à laquelle sont générés les éléments de la séquence.

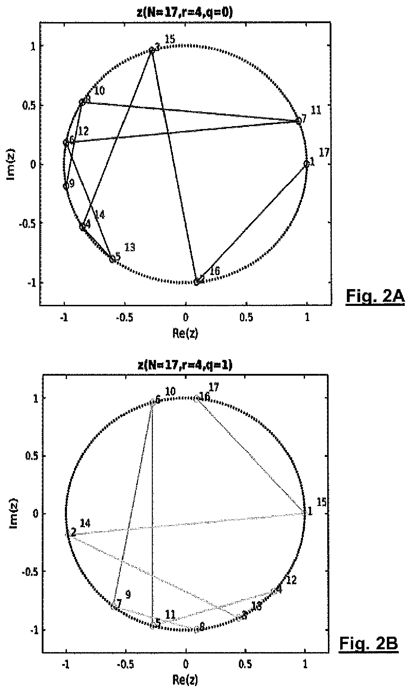

A titre d'exemple, on a représenté en Fig. 2A les éléments successifs d'une séquence de Zadoff-Chu non modulée et en Fig. 2B ceux de la même séquence, modulée par un offset de fréquence.

Dans le cas illustré, la longueur de la séquence est de $N = 17$ et sa racine est de $r = 4$. On remarque que le premier repliement de phase intervient entre le 5$^{\text{ème}}$ et le 6$^{\text{ème}}$ élément, les rotations de phase entre éléments successifs ultérieurs conduisant *a fortiori* à un repliement, compte tenu de la relation (3-1).

De manière similaire, en Fig. 2B, on a considéré la même séquence, cette fois-ci modulée avec un offset $q=1$. On note que le premier repliement de phase intervient ici dès la transition entre le 4$^{\text{ème}}$ et le 5$^{\text{ème}}$ élément.

Ainsi, pour une même séquence ZC de base, on comprend que l'on obtient des distributions distinctes des éléments de la séquence modulée avec différents offsets de fréquence.

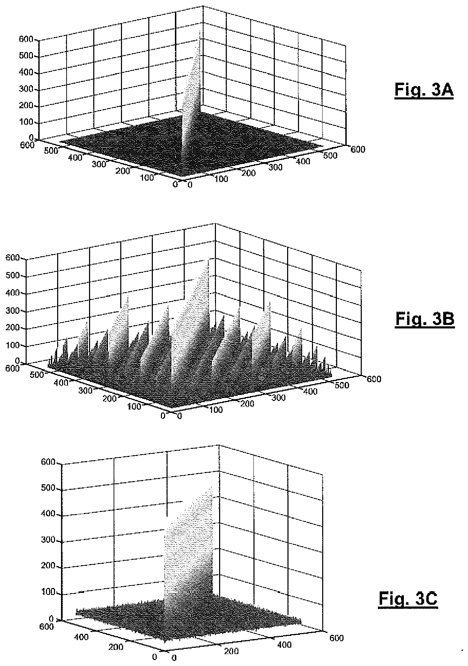

La Fig. 3A représente schématiquement la matrice des maxima de corrélation cyclique de séquences de Zadoff-Chu non modulées ($q = 0$) de longueur $N = 521$ (nombre premier) et de racines respectives $r = 2, ..., 520$. Autrement dit, pour deux séquences de $ZC_N^{r,0}$ et $ZC_N^{r',0}$, la figure représente en ordonnées le maximum sur r de $\left|\left[ZC_N^{r,0} \underset{cycl}{*} ZC_N^{r',0}\right](\tau)\right|$ où r est un décalage entre les deux séquences $ZC_N^{r,0}$ et $ZC_N^{r',0}$, et $\underset{cycl}{*}$ représente la corrélation cyclique de longueur N. On vérifie bien que le maximum (N) est obtenu sur la diagonale (maxima des fonctions d'autocorrélation) et que les fonctions d'inter-corrélation cyclique sont de faible module (borné par $\sqrt{N}$).

La Fig. 3B représente schématiquement la matrice des maxima de corrélation cyclique de séquences de ZC non modulées ($q = 0$) de longueur $N = 512$ et de racines respectives $r = 2,..., 511$. On notera toutefois que certaines de ces séquences ne sont d'ailleurs pas des séquences de ZC au sens strict dans la mesure où r et N ne sont pas premiers entre eux.

On remarque que la diagonale de la matrice est toujours constituée de valeurs maximales (N) mais que les maxima d'inter-corrélation cyclique dépendent fortement du couple de séquences $ZC_N^{r,0}, ZC_N^{r',0}$. En choisissant convenablement les valeurs des racines (notamment celles qui sont premières avec N), on obtient une sous-famille dont les fonctions d'inter-corrélation cyclique sont bornées par une valeur maximale prédéterminée.

La Fig. 3C représente schématiquement la matrice des maxima de corrélation cyclique de séquences de ZC non modulées ($q = 0$) de longueur égale au nombre premier $N = 521$ mais tronquées à 512 éléments. On remarque que les performances d'autocorrélation et d'intercorrélation cyclique ne sont que faiblement dégradées par rapport à celles illustrées en Fig. 3A.

De manière générale, si l'on souhaite opter pour une séquence de longueur égale à une puissance de 2, $P = 2^K$, on pourra sélectionner la séquence de ZC dont la longueur $N$ est égale au plus petit nombre premier supérieur à $P$ et tronquer cette dernière à $P$ éléments. Ainsi, les pertes de performances seront minimales tant en termes de débit que de niveau d'inter-corrélation.

Ainsi, par exemple pour une séquence de longueur 128, 256, 512, 1024, 2048, 4096 on choisira respectivement une séquence de ZC dont la longueur vaut 131, 257, 521, 1031, 2053, 4099.

La longueur $N$ des séquences à générer peut être sélectionnée en fonction de différents critères tels que le rapport signal sur bruit ou SNR (*Signal to Noise Ratio*), le taux d'erreur bit ou BER (*Bit Error Rate*), le débit requis sur la communication, voire encore l'étalement temporel du canal de transmission comme exposé plus loin.

Plus précisément, le facteur d'étalement ou SF (*Spreading Factor*) n'est autre que $N / K$, le choix d'une valeur élevée de $N$ permet de réduire le BER pour une même valeur de SNR ou d'être conforme à un taux de BER pour des conditions de SNR dégradées. De même, une faible valeur de $N$ permet de réduire la bande passante de transmission et d'augmenter le débit de la communication.

Ensuite, pour une valeur de $N$ donnée, on choisit des racines distinctes pour des communications dont on souhaite réduire l'interférence. Par exemple, on pourra attribuer deux racines distinctes à deux communications sur une voie descendante, issue d'une même station de base et à destination de deux objets connectés ou deux terminaux situés dans la couverture de cette station de base, que ces deux communications soient synchrones ou non. On pourra en outre attribuer deux racines distinctes pour deux communications distinctes sur la voie descendante à destination d'un seul et même récepteur.

De manière similaire, pour la voie montante, on pourra attribuer des racines distinctes à deux objets connectés ou deux terminaux risquant d'interférer.

L'allocation des longueurs de séquence/ de racines pourra se faire de manière dynamique par un ordonnanceur (*scheduler*). Dans certains cas, l'ordonnancement dynamique pourra être implicite. Par exemple, si deux communications montantes interfèrent, la station de base peut notifier cette situation aux objets connectés concernés et au moins l'un d'entre eux pourra basculer sur une autre racine suivante dans une séquence de racines prédéterminée, connue à la fois de l'objet connecté et de la station de base. L'homme du métier pourra prévoir différentes variantes d'ordonnancement entre stations de base voisines, selon un mode centralisé ou distribué, sans sortir du cadre de la présente invention.

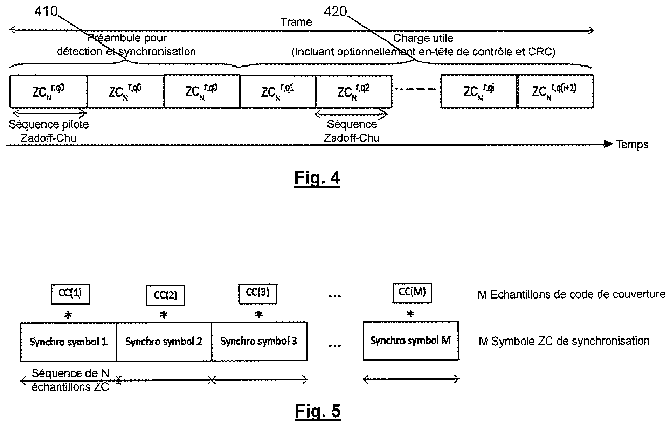

Quel que soit le mode de réalisation, la transmission de paquets de symboles $K$-aires, c'est-à-dire de mots de $K$ bits, est typiquement effectuée au moyen de trames de transmission dont la structure est illustrée en Fig. 4.

Cette trame de transmission comprend un préambule, 410, et une charge utile, 420. Le préambule contient des symboles pilotes permettant au récepteur de détecter le début de la trame et de se synchroniser.

Par exemple, les symboles pilotes seront associés à un offset de fréquence dédié, $q_0$, par exemple $q_0 = 0$. Autrement dit, dans ce cas, le préambule d'une trame de transmission ne sera constitué que de séquences de ZC non modulées.

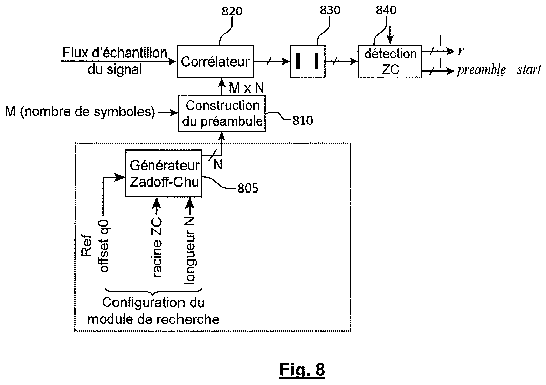

Les symboles pilotes seront détectés par le récepteur au moyen d'un corrélateur effectuant une corrélation au fil de l'eau (ou corrélation continue) sur le signal reçu. Par exemple, la répétition d'un nombre prédéterminé, $M$, de symboles pilotes pourra être l'indicateur d'un début d'une trame. Afin de faciliter la synchronisation et la détection du début d'une trame (voire d'une séquence de trames), ces symboles pilotes peuvent être multipliés par les éléments d'un code de couverture ayant de bonnes propriétés de corrélation apériodiques, par exemple les éléments d'un code de Barker. La synchronisation du récepteur par détection de préambule sera décrite plus loin en relation avec la Fig. 8. Une resynchronisation du récepteur pourra être effectuée régulièrement pendant la durée de réception d'une séquence de trames, à chaque trame ou de manière générale toutes les $J$ trames où $J$ est un entier prédéterminé.

La Fig. 5 montre une série de symboles pilotes d'un préambule de trame, respectivement multipliés par les $M$ éléments d'un code de couverture, notés $CC(1)$, ..., $CC(M)$. Autrement dit, la première séquence de ZC, correspondant au premier symbole pilote, est multipliée par $CC(1)$, la seconde séquence de ZC, correspondant au second symbole pilote, est multipliée par $CC(2)$, et ainsi de suite jusqu'à la dernière séquence de ZC, multipliée par $CC(M)$.

Par exemple les éléments d'un code de Barker de longueur $M = 11$ sont donnés par : +1,+1,+1,-1,-1,-1,+1,-1,-1,+1,-1

A la réception, les différents symboles pilotes (c'est-à-dire les séquences de ZC correspondant à ces symboles pilotes), sont multipliés par les mêmes éléments de code de couverture avant ou après la corrélation continue. Lorsque les éléments du code de couverture sont parfaitement alignés avec les symboles pilotes, le résultat de la corrélation présente un maximum.

La charge utile de la trame de transmission est constituée de séquences de ZC modulées par les mots $K$-aires à transmettre. Elle pourra aussi comprendre un entête de contrôle et des séquences de ZC modulées par des symboles de CRC.

Bien que les symboles $K$-aires soient transmis successivement et donc que les séquences de ZC modulées par ces symboles se succèdent également au niveau du transmetteur, le canal de transmission peut, s'il est multi-trajet, donner lieu une interférence inter-symbole. Autrement dit, une réplique d'une séquence de ZC modulée par un premier symbole peut être superposée au niveau du récepteur à une séquence de ZC modulée par un second symbole.

Afin de réduire l'interférence inter-symbole, on choisira avantageusement une longueur de séquence $N$ telle que :

$$N - \Delta > q_{\max} \qquad\qquad (5)$$

où $\Delta$ est l'étalement temporel du canal de transmission et $q_{max}$ est l'offset de fréquence maximal pour moduler les symboles *K*-aires, tous deux exprimés en nombre de périodes de génération d'éléments de la séquence de ZC. En effet, tant que le chevauchement entre symboles consécutifs, dû à l'étalement du canal de transmission, est de durée inférieure à la durée ($N - 2^K$) de la partie redondante de la séquence de ZC, les symboles en question peuvent être récupérés sans perte d'information.

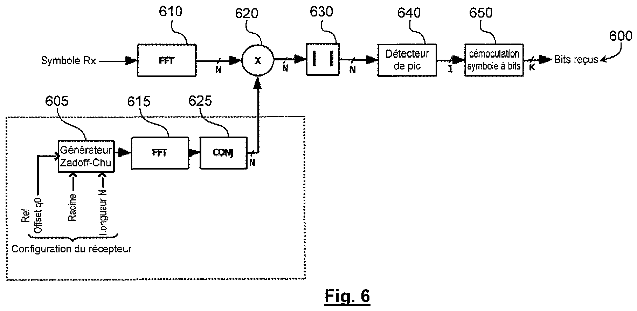

La Fig. 6 représente de manière schématique un dispositif de démodulation selon un premier mode de réalisation de l'invention.

Ce premier mode de réalisation correspond à une implémentation du corrélateur cyclique dans le domaine fréquentiel.

Le démodulateur reçoit le signal correspondant à une trame de symboles comme décrit plus haut, autrement dit à une série de séquences de ZC obtenues par modulation de ces symboles.

La démodulateur, 600, comprend un module de FFT, 610, pour effectuer une FFT de taille *N* (égale à la longueur de la séquence de ZC) sur le signal reçu, préalablement échantillonné (par deux horloges en quadrature) à la fréquence $f_s$ à laquelle sont générés les éléments des séquences de ZC. Le résultat de la FFT est un bloc de *N* valeurs complexes.

La détection du début de la trame et des séquences de ZC est réalisée au moyen de la série de symboles pilotes figurant dans le préambule. On suppose que le récepteur s'est préalablement synchronisé au moyen d'une détection de préambule comme décrit plus loin.

Le démodulateur comprend un générateur local d'une séquence ZC de référence, 605, identique au générateur présent dans le modulateur de la Fig. 3 ou 4. Le générateur local est paramétré par la longueur *N* de la séquence de ZC , la racine *r* utilisée pour la communication et, le cas échéant, l'offset de fréquence $q_0$, dédié aux symboles pilotes. La racine r utilisée pour la communication pourra être fournie par le détecteur de préambule décrit plus loin.

Un module de transformée de Fourier discrète (DFT), 615, permet d'effectuer une DFT de taille N sur le bloc des éléments de la séquence de ZC fourni par le générateur local, 605. Lorsque *N* est une puissance de 2, la DFT sera réalisée au moyen d'une FFT.

Le bloc de N valeurs complexes ainsi obtenu dans le domaine fréquentiel est conjugué dans le module de conjugaison, 625, avant d'être multiplié terme à terme en 620 avec le bloc de *N* valeurs complexes issu du module de DFT, 610.

Les modules de ces *N* valeurs complexes sont calculés en 630 et comparés par le détecteur de pic de corrélation 640. Autrement dit, le détecteur de pic 640 détermine l'offset de fréquence correspondant à la valeur complexe de plus grand module sur le bloc reçu.

Compte tenu du fait que le pic de corrélation cyclique de deux séquences de ZC de même longueur *N,* de même racine *r* et d'offsets de fréquence *q, ℓ* a pour valeur $\left| \rho\left[ ZC_{r,q}^N, ZC_{r,\ell}^N \right] \right| = N\delta\left( q - \ell \right)$, cette discrimination de pics est très efficace, ce même en présence de séquence de ZC tronquée. Le détecteur 640 détermine donc :

$$\hat{q} = \arg\max_q \left( \left| \rho\left[ ZC_{r,q}^N, \sigma \right] \right| \right) \qquad (6)$$

où $\sigma$ représente la séquence de *N* échantillons reçus par le démodulateur et *P* représente l'opération de corrélation cyclique.

Cet offset de fréquence est enfin traduit en un mot de *K* bits, $\hat{\alpha}_0, ..., \hat{\alpha}_{K-1}$ dans le convertisseur décimal à binaire (désigné par *bit demapper* sur la figure), 650.

Il convient de noter que générateur 605 pourra générer des séquences de référence pour toutes les valeurs possibles de *r* et, le cas échéant, de *N.*

La séquence de référence peut être n'importe quelle séquence ZC de même longueur et de même racine que celle transmise par l'émetteur dans la mesure où l'offset de fréquence peut être déterminé de manière relative par rapport à celui ayant servi à générer la fréquence de référence. Ainsi, par exemple la séquence de référence pourra être une séquence ZC non modulée ou une séquence ZC correspondant à un symbole pilote (et donc d'offset $q_0$).

Dans tous les cas, en pourra remplacer l'ensemble constitué par le générateur de séquence de référence, 605, le module de DFT, 615, et le module de conjugaison, 625, par une simple mémoire adressée par la longueur *N,* la racine *r* et, le cas échéant, l'offset de fréquence de référence. La fréquence La valeur stockée dans la mémoire à cette adresse sera simplement $\left( \widetilde{ZC}_{r,q0}^N(v) \right)^*$, où $\widetilde{ZC}_{r,q0}^N(v)$ est la valeur prise par la transformée de Fourier discrète de $ZC_{r,q0}^N$,

à la fréquence v et $z^*$ est le conjugué de **z**. Les valeurs $\left(\widetilde{ZC}^{N}_{r,q0}(v)\right)^*$ lues de la mémoire sont alors fournies tour à tour au multiplieur, 620.

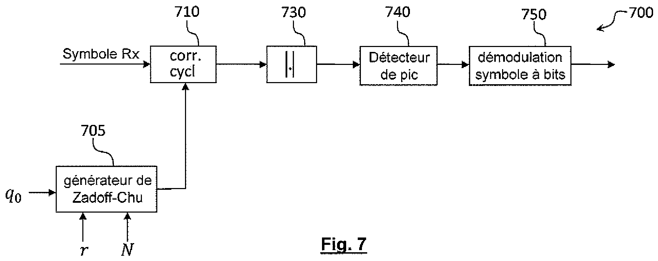

La Fig. 7 représente de manière schématique un dispositif de démodulation selon un second mode de réalisation de l'invention.

Ce second mode de réalisation correspond à une implémentation du corrélateur cyclique dans le domaine temporel.

Le signal reçu par le démodulateur 700 est échantillonné (par deux horloges en quadrature) à la fréquence $f_s$ à laquelle sont générés les éléments des séquences de ZC. Le résultat est un bloc de $N$ valeurs complexes. Ce bloc est fourni à un corrélateur cyclique, 710.

Le corrélateur cyclique 710 reçoit par ailleurs les $N$ éléments successifs d'une séquence ZC de référence générée par le générateur local 705. Ce générateur local est identique au générateur présent dans le modulateur de la Fig. 1. Le générateur local est paramétré par la longueur $N$ de la séquence ZC , la racine $r$ utilisée pour la communication et, le cas échéant, l'offset de fréquence $q_0$, dédié aux symboles pilotes.

Les éléments de la séquence de référence ZC sont fournis au corrélateur cyclique 710. Les résultats de la corrélation cyclique (correspondant à différents temps de retard dans le domaine temporel) font l'objet d'un calcul de module en 730 et la valeur maximale du module sur le bloc est déterminé par le détecteur de pic de corrélation 740. Le détecteur de pic 740 détermine la position du pic de corrélation cyclique entre la séquence ZC de référence et la séquence de ZC reçue par le démodulateur et en déduit l'offset de temps correspondant.

Compte tenu de la définition des séquences de ZC, on peut montrer qu'une permutation cyclique d'une séquence de ZC au moyen d'un offset en temps se traduit par un offset de fréquence :

Si $N$ est une valeur impaire :

$$ZC^{r,0}_{N}(k+q') = e^{-j\frac{\pi}{N}r(k+q'+1)(k+q')} = e^{-j\frac{\pi}{N}r\left[(k+2q'+1)k+(q'+1)q'\right]} = e^{j\varphi_0}e^{-j\frac{\pi}{N}rk(k+2q'+1)} \qquad (7\text{-}1)$$

où $e^{j\varphi_0} = e^{-j\frac{\pi}{N}r(q'+1)q'}$ est un terme de phase constant le long de la séquence.

De même, si N est une valeur paire :

$$ZC^{r,0}_{N}(k+q') = e^{-j\frac{\pi}{N}r(k+q')(k+q')} = e^{-j\frac{\pi}{N}r\left[k^2+2q'k+q'^2\right]} = e^{j\phi_0}e^{-j\frac{\pi}{N}r(k+2q')k} \qquad (7\text{-}2)$$

où $e^{j\phi_0} = e^{j\frac{\pi}{N}rq'^2}$ est un terme de phase constant le long de la séquence.

Etant donné que la détection est réalisée sur le module du résultat de la corrélation cyclique, on comprendra qu'un offset en temps, $q'$, (exprimé en nombre de périodes $T_s = 1/f_s$) se traduit par un offset de fréquence $q'$ (exprimé en incréments $\frac{r}{N}f_s$). Autrement dit, pour un même signal reçu, la valeur d'offset en temps fourni par le détecteur de pic 740 (exprimé en nombre de périodes $T = 1/f_s$) sera identique à la valeur d'offset en fréquence fournie par le détecteur de pic 640.

Le convertisseur décimal à binaire 750 (dénommé *bit demapper* sur la figure) convertit cette valeur d'offset en un nombre binaire, $\hat{\alpha}_0, ..., \hat{\alpha}_{K-1}$.

Il convient de noter que générateur 705 pourra générer des séquences de référence pour toutes les valeurs possibles de $r$ et, le cas échéant, de $N$.

Dans tous les cas, comme précédemment, on pourra remplacer l'ensemble constitué par le générateur de séquence de référence 705 par une simple mémoire adressée par la longueur $N$, la racine $r$, l'offset de temps (ou de fréquence) de référence. La valeur stockée dans la mémoire à cette adresse sera simplement $ZC^{N}_{r,q}(k)$. Les valeurs $ZC^{N}_{r,q}(k)$ lues de la mémoire sont fournies au corrélateur cyclique, 710.

La Fig. 8 représente de manière schématique un dispositif de synchronisation par détection de préambule pouvant être utilisé conjointement avec un dispositif de démodulation selon l'invention.

Plus précisément, ce dispositif de synchronisation permet de fournir au démodulateur d'une part la racine *r* utilisée pour la communication et l'instant correspondant au début de la trame, voire de la charge utile.

Un corrélateur continu 820 reçoit, sur une première entrée, le flux d'échantillons (complexes) du signal reçu et, sur une seconde entrée une séquence d'échantillons correspondant à une réplique du préambule.

La réplique du préambule est formée par le module 810 à partir des séquences de ZC générées par le générateur local 805. Le générateur local 805 est identique au générateur 605 (ou 705) précédemment décrit et les mêmes variantes s'appliquent également. Le module de formation de préambule 810 concatène les séquences de ZC des symboles pilotes du préambule. Par exemple, si le préambule est constitué de la répétition de *M* symboles pilotes identiques, le module 810 répétera *M* fois la séquence ZC de ce symbole pilote. En outre, si le préambule utilise une séquence de couverture de Barker, le module 810 effectuera une multiplication de chaque séquence ZC avec l'élément du code correspondant.

Bien entendu, le générateur 805 et le module 810 pourront être implémentés au moyen d'une simple mémoire adressée par l'offset de fréquence $q_0$ correspondant aux symboles pilotes, la racine *r* et la longueur *N* de la séquence ainsi que le nombre *M* de répétition des symboles pilotes.

Le corrélateur 820 effectue une corrélation au fil de l'eau de la séquence d'échantillons du signal reçu avec la séquence d'échantillons du préambule fourni par le module 810. Autrement dit, à chaque période $T_s$, le corrélateur calcule un résultat de corrélation des *MN* échantillons du préambule avec les derniers *MN* échantillons du signal.

Le module de ces résultats de corrélation est calculé en 830 et une détection de pic de corrélation est réalisée dans le détecteur 840. En pratique, le détecteur compare la valeur du module fournie par 830 avec un seuil prédéterminé inférieur à *N*.

Le détecteur donne la position temporelle du pic de corrélation, indiquant le début du préambule et donc de la trame. Le démodulateur peut ensuite se caler sur le début de la charge utile pour démoduler les symboles d'information.

En outre, si la racine *r* n'est pas connue du récepteur, le dispositif de synchronisation peut effectuer une recherche séquentielle ou en parallèle sur des préambules générés à partir des valeurs de racines appartenant à l'ensemble des racines possibles voire d'un sous-ensemble de ce dernier (par exemple si l'ensemble des racines est hiérarchisé et que le récepteur possède une connaissance *a priori* de la branche d'arborescence dans laquelle la racine se trouve). Par recherche séquentielle, on entend que la corrélation est effectuée avec une cadence $Rf_s$ sur les *R* racines à tester. Par recherche parallèle, on entend que la corrélation est effectuée sur *R* branches en parallèle, chaque branche étant associée à une des *R* racines à tester. En tout état de cause, les résultats de corrélations sont traités par le détecteur 840. Celui-ci détermine alors à la fois la valeur de la racine (fournissant un pic de corrélation) et le début du préambule (à partir de la position de ce pic).

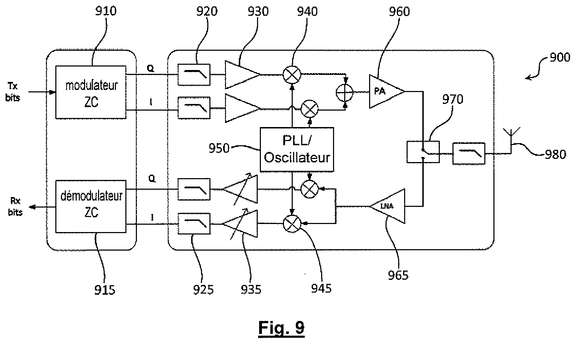

La Fig. 9 représente de manière schématique un premier émetteur/récepteur utilisant un dispositif de modulation et un dispositif de démodulation selon un mode de réalisation de l'invention.

L'émetteur/récepteur 900 pourra équiper par exemple une station de base ou un objet connecté.

Il comprend un dispositif de modulation, 910, selon le mode de réalisation tel que décrit en relation avec la Fig. 1. Le dispositif de modulation transforme les symboles *K*-aires à transmettre en des séquences de ZC, un symbole *K*-aire étant converti en un offset de fréquence d'une séquence de ZC. Les éléments complexes d'une séquence de ZC sont fournis par le dispositif de modulation à une cadence $f_s$. La partie réelle de ces éléments complexes est fournie une voie en phase et la partie imaginaire à une voie en quadrature, chaque voie comprend typiquement un filtre passe-bas, 920 et un amplificateur en bande de base 930. Les signaux I et Q de ces voies sont respectivement mélangés à deux signaux de porteuse en quadrature dans un modulateur en quadrature, 940. Les signaux de porteuses sont générés par un oscillateur sinusoïdal, 950, stabilisé en fréquence. Le signal RF en sortie du modulateur en quadrature est amplifié dans un amplificateur de puissance 960 puis émis par une antenne 980, via un duplexeur 970.

A la réception, le signal d'antenne reçu via le duplexeur 970 est amplifié par un amplificateur bas bruit (LNA), 965, puis démodulé en quadrature par le mélangeur en quadrature 945. Les signaux I et Q en sortie du mélangeur sont amplifiés par les amplificateurs 935, filtrés par les filtres passe-bas 925 puis échantillonnés à la cadence $f_s$. Les échantillons complexes ainsi obtenus sont fournis à un dispositif de démodulation 915, selon le premier mode de réalisation, tel que décrit en relation avec la Fig. 6, ou bien selon le second mode de réalisation, tel que décrit en relation avec la Fig. 7.

Le modulateur en quadrature 940 présent dans l'émetteur/ récepteur à conversion directe de la Fig. 9 utilise les parties réelles et imaginaires des éléments des séquences de ZC à émettre. En lieu et place du modulateur en quadrature, il est possible d'utiliser un modulateur polaire comme décrit ci-après.

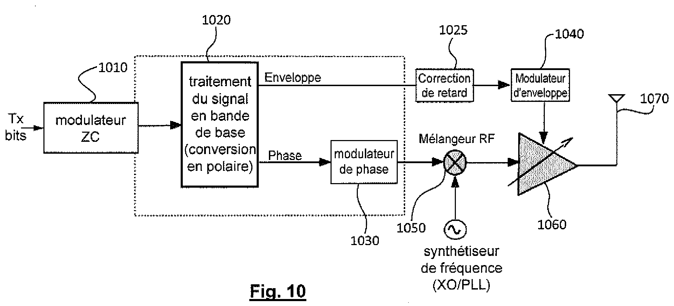

La Fig. 10 représente de manière schématique un modulateur polaire utilisable dans le cadre d'un second émetteur selon un mode réalisation de l'invention.

De manière générale, dans un modulateur polaire, les symboles complexes à transmettre sont convertis dans un convertisseur polaire en bande de base, 1020, en un signal d'enveloppe (module des éléments complexes) et un signal de phase (phase instantanée des élément complexes) représentant le signal en bande de base :

$$s(t) = A(t)\cos\left(2\pi f_0 t + \varphi(t)\right) \tag{8}$$

où $A(t)$ est le signal d'enveloppe et $\cos(2\pi f_0 t + \varphi(t))$ est le signal de phase. Le signal de phase est ensuite translaté en bande RF grâce au mélangeur 1050 avant d'être amplifié par l'amplificateur de puissance 1060. Le signal d'enveloppe est retardé en 1025 pour compenser les différences de temps de propagation pouvant exister entre la branche d'amplitude et la branche de phase, et module l'amplitude du signal RF, au moyen du modulateur d'enveloppe 1040, en commandant le gain de l'amplificateur de puissance. Le signal RF ainsi modulé est alors transmis par l'antenne 1070.

Dans le cas où, comme dans la présente invention, il s'agit de transmettre des éléments complexes d'une séquence ZC, telle que générée par le modulateur 1010, on comprend que la génération du signal d'enveloppe sera inutile dans la mesure où le module de ces éléments est constant et égal à 1. Le retard 1025 et le modulateur d'enveloppe 1040 pourront simplement être supprimés et le gain de l'amplificateur de puissance fixé à une valeur de consigne.

L'homme du métier comprendra que, de manière symétrique, un démodulateur polaire pourra être implémenté en réception.

Des architectures d'émetteur/ récepteur RF autres que celles illustrées en Figs. 9 et 10 pourront être en outre envisagées sans sortir du cadre de la présente invention.

Bien entendu, différents dispositifs de modulation / démodulation élémentaires pourront être prévus au sein d'un même émetteur/récepteur pour séparer des communications à destination/ en provenance de différents utilisateurs. Comme indiqué précédemment, ces dispositifs de modulation/ démodulation utiliseront alors des valeurs de racines distinctes. Avantageusement, pour une longueur de séquence de ZC égale à N, on choisira des valeurs de racines $r_p$, $P = 1, .., P$, telles que $|r_p - r_{p'}|$ soit premier avec $N$, $\forall p,p'$.

## Revendications

1. Méthode de modulation d'une pluralité de symboles $K$-aires à transmettre sur un canal de transmission, la méthode comprenant:

   convertir les k bits de chaque symbole $K$-aire en un valeur entière distincte, et générer une séquence de Zadoff-Chu, associée à ce symbole, ladite séquence de Zadoff-Chu étant définie comme:

$$ZC_N^{r;q}(k) = e^{-j\frac{\pi}{N}r(k+1+2q)k}, \quad k = 0,...,N-1 \ \text{si} \ N \ \text{est impair} \tag{1}$$

$$ZC_N^{r;q}(k) = e^{-j\frac{\pi}{N}r(k+2q)k}, \quad k = 0,...,N-1 \ \text{si} \ N \ \text{est pair} \tag{2}$$

   ladite séquence de Zadoff-Chu étant de longueur $N$, de racine r et d'offset de fréquence $q$ où $N$ est un entier positif tel que $\log_2 N \geq K$, $r$ est un entier tel que $r > 1$ et premier avec $N$, $q$ est un entier relatif, chaque symbole $K$-aire étant modulé sous la forme d'une séquence, de longueur supérieure ou égale à $2^K$, d'éléments complexes consécutifs de la séquence de Zadoff-Chu de longueur N, de racine r et d'offset de fréquence q égal à ladite valeur entière associée au dit symbole $K$-aire, ladite méthode de modulation étant **caractérisée en ce qu'**à deux symboles $K$-aires quelconques de ladite pluralité sont associées des séquences de Zadoff-Chu ayant des offsets de fréquence distincts.

2. Méthode de modulation selon la revendication 1, **caractérisée en ce que** la séquence d'éléments complexes consécutifs est constituée par l'ensemble des éléments de ladite séquence de Zadoff-Chu.

3. Méthode de modulation selon la revendication 2, **caractérisée en ce que** la longueur de la séquence de Zadoff-Chu est égale à une puissance de 2.

4. Méthode de modulation selon la revendication 1, **caractérisée en ce que** la longueur de ladite séquence de Zadoff-Chu est choisie égale au plus petit nombre premier supérieur à $2^K$ et que la séquence d'éléments complexes consécutifs est obtenue en tronquant ladite séquence de Zadoff-Chu à $2^K$ éléments.

5. Méthode de modulation selon l'une des revendications 1 à 4, **caractérisée en ce que** la longueur de la séquence de Zadoff-Chu est choisie supérieure à la différence entre un offset maximal de fréquence pour moduler les symboles $K$-aires et l'étalement temporel du canal de transmission, exprimé en nombre de périodes de transmission d'éléments de cette séquence.

6. Méthode de modulation selon l'une des revendications 1 à 5, **caractérisée en ce que** la partie réelle et la partie imaginaire des éléments de la séquence d'éléments complexes consécutifs d'une séquence de Zadoff-Chu associée à un symbole $K$-aire modulent respectivement deux porteuses en quadrature et que le signal modulé ainsi obtenu est transmis sur le canal de transmission.

7. Méthode de modulation selon l'une des revendications 1 à 5, **caractérisée en ce que** l'on génère un signal de phase en bande de base, obtenu comme la phase des éléments complexes consécutifs de la séquence de Zadoff-Chu associée à un symbole $K$-aire, et que l'on translate le signal de phase en bande RF, le signal RF ainsi obtenu étant transmis sur le canal de transmission.

8. Méthode de transmission de données sur une pluralité de communications à destination ou en provenance de différents utilisateurs, **caractérisée en ce que** les données à transmettre sont transformées en symboles $K$-aires, les symboles $K$-aires des différents utilisateurs étant modulés au moyen de la méthode de modulation selon l'une des revendications précédentes, les racines des séquences de Zadoff-Chu utilisées pour moduler les symboles $K$-aires de deux utilisateurs distincts étant choisies distinctes et leurs longueurs choisies égales à une longueur commune.

9. Méthode de transmission de données selon la revendication 8, **caractérisée en ce que** les racines utilisées pour moduler les symboles $K$-aires de deux utilisateurs distincts sont choisies telles que la valeur absolue de leur différence soit première avec ladite longueur commune.

10. Dispositif de modulation pour moduler une pluralité de symboles $K$-aires à transmettre sur un canal de transmission, comprenant un convertisseur binaire à décimal (110) transformant les $K$ bits de chaque symbole $K$-aire en une valeur entière distincte, et un générateur de séquences de Zadoff-Chu (120), ayant comme paramètres d'entrée une longueur $N$ de séquence et une racine $r$ telle que $r$ entier, $r > 1$ et premier avec $N$, ainsi qu'un offset de fréquence, $q$, $q$ étant un entier relatif, ledit générateur générant, pour chaque symbole $K$-aire, une séquence de longueur supérieure ou égale à $2^K$, formée par des éléments complexes d'une séquence de Zadoff-Chu de longueur $N$, de racine $r$ et d'offset de fréquence $q$ égal à la valeur entière fournie par ledit convertisseur binaire à décimal, ladite séquence de Zadoff-Chu étant définie comme:

$$ZC_N^{r;q}(k) = e^{-j\frac{\pi}{N}r(k+1+2q)k} \, , \, k = 0,...,N-1 \text{ si } N \text{ est impair} \tag{1}$$

$$ZC_N^{r;q}(k) = e^{-j\frac{\pi}{N}r(k+2q)k} \, , \, k = 0,...,N-1 \text{ si } N \text{ est pair} \tag{2}$$

ledit générateur de séquences de Zadoff-Chu étant **caractérisé en ce qu'**il est configuré de sorte qu'à deux symboles $K$-aires quelconques de ladite pluralité sont associées des séquences de Zadoff-Chu ayant des offsets de fréquence distincts.

11. Méthode de démodulation d'un signal représentant une séquence de Zadoff-Chu modulée en offset de fréquence au moyen d'une méthode de modulation selon l'une des revendications 1 à 7, **caractérisée en ce que** ledit signal est échantillonné en bande de base pour fournir une séquence d'échantillons complexes, que ladite séquence d'échantillons complexes est corrélée par corrélation cyclique (710) avec une séquence de Zadoff-Chu de référence pour fournir un résultat de corrélation cyclique, ladite séquence de Zadoff-Chu étant définie comme:

$$ZC_N^{r,q}(k) = e^{-j\frac{\pi}{N}r(k+1+2q)k} \quad , \; k = 0,...,N-1 \text{ si } N \text{ est impair} \qquad (1)$$

$$ZC_N^{r,q}(k) = e^{-j\frac{\pi}{N}r(k+2q)k} \quad , \; k = 0,...,N-1 \text{ si } N \text{ est pair} \qquad (2)$$

ladite séquence de Zadoff-Chu étant de longueur $N$, de racine r et d'offset de fréquence $q$ où $N$ est un entier positif tel que $\log_2 N \geq K$, r est un entier tel que $r > 1$ et premier avec $N$, $q$ est un entier relatif, et que l'on détecte (740) la position temporelle d'un pic de corrélation dans le module du résultat de corrélation cyclique ainsi obtenu, et que l'on en déduit un offset de fréquence, $\hat{q}$ correspondant à cette position temporelle, ledit offset de fréquence étant ensuite converti par un convertisseur décimal à binaire (750) en un symbole $K$-aire.

**12.** Dispositif de démodulation d'un signal représentant une séquence de Zadoff-Chu modulée en offset de fréquence au moyen d'une méthode de modulation selon l'une des revendications 1 à 7, ledit signal est échantillonné en bande de base pour fournir un premier bloc d'éléments complexes de taille $N$, **caractérisé en ce que** ledit dispositif comprend un module de DFT (610) configuré pour effectuer une transformée de Fourier discrète de taille $N$ du premier bloc d'éléments complexes pour fournir un premier bloc d'éléments fréquentiels complexes, un multiplicateur (620) configuré pour multiplier terme à terme les éléments fréquentiels complexes du premier bloc avec les éléments fréquentiels complexes d'un second bloc obtenu par conjugaison complexe d'une transformée de Fourier discrète d'une séquence de Zadoff-Chu de référence, ladite séquence de Zadoff-Chu étant définie comme :

$$ZC_N^{r,q}(k) = e^{-j\frac{\pi}{N}r(k+1+2q)k} \quad , \; k = 0,...,N-1 \text{ si } N \text{ est impair} \qquad (1)$$

$$ZC_N^{r,q}(k) = e^{-j\frac{\pi}{N}r(k+2q)k} \quad , \; k = 0,...,N-1 \text{ si } N \text{ est pair} \qquad (2)$$

ladite séquence de Zadoff-Chu étant de longueur $N$, de racine $r$ et d'offset de fréquence $q$ où N est un entier positif tel que $\log_2 N \geq K$, $r$ est un entier tel que $r > 1$ et premier avec $N$, $q$ est un entier relatif, ledit dispositif comprenant en outre un calculateur de module (630) configuré pour calculer le module des résultats de multiplication des premiers et seconds éléments fréquentiels complexes, un détecteur de pic de corrélation configuré pour comparer les valeurs de module ainsi obtenues (640) pour déterminer la position fréquentielle d'un pic de corrélation cyclique, et déduire l'offset de fréquence, $\hat{q}$, correspondant à cette position fréquentielle, et un convertisseur décimal à binaire configuré pour convertir ledit offset de fréquence en un symbole $K$-aire.

**13.** Dispositif de démodulation d'un signal représentant une séquence de Zadoff-Chu modulée en offset de fréquence au moyen d'une méthode de modulation selon l'une des revendications 1 à 7, ledit signal est échantillonné en bande de base pour fournir un premier bloc d'éléments complexes de taille N, **caractérisé en ce qu'**il comprend un corrélateur cyclique (710) de taille $N$ pour corréler cycliquement ledit premier bloc avec un second bloc, ledit second bloc étant constitué d'une séquence de Zadoff-Chu de référence, ladite séquence de Zadoff-Chu étant définie comme :

$$ZC_N^{r,q}(k) = e^{-j\frac{\pi}{N}r(k+1+2q)k}, \ k = 0,...,N-1 \text{ si } N \text{ est impair} \tag{1}$$

$$ZC_N^{r,q}(k) = e^{-j\frac{\pi}{N}r(k+2q)k}, \ k = 0,...,N-1 \text{ si } N \text{ est pair} \tag{2}$$

ladite séquence de Zadoff-Chu étant de longueur $N$, de racine $r$ et d'offset de fréquence $q$ où $N$ est un entier positif tel que $\log_2 N \geq K$, $r$ est un entier tel que $r > 1$ et premier avec $N$, $q$ est un entier relatif, ledit dispositif comprenant en outre un calculateur de module (730) configuré pour calculer le module de ladite corrélation cyclique et un détecteur de pic de corrélation (740) configuré pour déterminer, à partir de ce module, la position temporelle d'un pic de corrélation cyclique et configuré pour déduire un offset de fréquence, $\hat{q}$ correspondant à cette position temporelle, et un convertisseur décimal à binaire configuré pour convertir ledit offset de fréquence en un symbole $K$-aire.

14. Emetteur/récepteur **caractérisé en ce qu'**il comprend au moins un dispositif de modulation selon la revendication 10 et au moins un dispositif de démodulation selon l'une des revendications 12 ou 13.

15. Emetteur/récepteur selon la revendication 14, **caractérisé en ce qu'**il comprend une pluralité de dispositifs de modulation selon la revendication 10, chaque dispositif de modulation de ladite pluralité correspondant à une valeur de racine différente, et/ou une pluralité de dispositifs de démodulation selon l'une des revendications 12 ou 13, chaque dispositif de démodulation de ladite pluralité correspondant à une valeur de racine différente.

**Patentansprüche**

1. Verfahren zum Modulieren einer Vielzahl von über einen Übertragungskanal zu übertragenden $K$-nären Symbolen, wobei das Verfahren umfasst:

   Umwandeln der k Bits eines jeden $K$-nären Symbols in einen separaten ganzen Wert, und Generieren einer Zadoff-Chu-Sequenz, welche diesem Symbol zugewiesen wird, wobei die Zadoff-Chu-Sequenz definiert wird als:

$$ZC_N^{r,q}(k) = e^{-j\frac{\pi}{N}r(k+1+2q)k}, k = 0,...,N-1, \textit{wenn N ungerade ist} \tag{1}$$

$$ZC_N^{r,q}(k) = e^{-j\frac{\pi}{N}r(k+2q)k}, k = 0,...,N-1, \textit{wenn N gerade ist} \tag{2}$$

   wobei die Zadoff-Chu-Sequenz eine Länge $N$, eine Wurzel $r$ und einen Frequenz-Offset q aufweist, wobei $N$ eine positive ganze Zahl, wie $\log_2 N \geq K$ ist, $r$ eine ganze Zahl, wie $r>1$ und primär mit $N$ ist, $q$ eine ganze Zahl ist, wobei jedes $K$-näre Symbol in Form einer Sequenz moduliert wird, mit einer Länge größer oder gleich $2^K$, mit aufeinanderfolgenden komplexen Elementen der Zadoff-Chu-Sequenz der Länge N, der Wurzel r und dem Frequenz-Offset q gleich dem ganzen Wert, der dem $K$-nären Symbol zugewiesen wird, wobei das Verfahren zum Modulieren **dadurch gekennzeichnet ist, dass** zwei beliebigen $K$-nären Symbolen der Vielzahl Zadoff-Chu-Sequenzen zugewiesen sind, die unterschiedliche Frequenz-Offsets aufweisen.

2. Verfahren zum Modulieren nach Anspruch 1, **dadurch gekennzeichnet, dass** die Sequenz mit aufeinanderfolgenden komplexen Elementen durch die Gesamtheit der Elemente der Zadoff-Chu-Sequenz gebildet wird.

3. Verfahren zum Modulieren nach Anspruch 2, **dadurch gekennzeichnet, dass** die Länge der Zadoff-Chu-Sequenz gleich einer Potenz 2 ist.

4. Verfahren zum Modulieren nach Anspruch 1, **dadurch gekennzeichnet, dass** die Länge der Zadoff-Chu-Sequenz gleich der kleinsten Primzahl größer als $2^K$ ausgewählt wird, und dass die Sequenz mit aufeinanderfolgenden komplexen Elementen durch Trunkieren der Zadoff-Chu-Sequenz mit $2^K$ Elementen erhalten wird.

5. Verfahren zum Modulieren nach einem der Ansprüche 1 bis 4, **dadurch gekennzeichnet, dass** die Länge der Zadoff-Chu-Sequenz größer als die Differenz zwischen einem maximalen Frequenz-Offset zum Modulieren der K-nären Symbole und der Zeitdehnung des Übertragungskanals, in Anzahl an Übertragungsperioden von Elementen dieser Sequenz ausgedrückt, ausgewählt wird.

6. Verfahren zum Modulieren nach einem der Ansprüche 1 bis 5, **dadurch gekennzeichnet, dass** der reelle Teil und der gedachte Teil der Elemente der Sequenz mit aufeinanderfolgenden komplexen Elementen einer Zadoff-Chu-Sequenz, die einem *K*-nären Symbol zugewiesen wird, jeweils zwei Quadraturträger modulieren, und das so erhaltene modulierte Signal über den Übertragungskanal übertragen wird.

7. Verfahren zum Modulieren nach einem der Ansprüche 1 bis 5, **dadurch gekennzeichnet, dass** ein Basisband-Phasensignal, das als die Phase der aufeinanderfolgenden komplexen Elemente der einem *K*-nären Symbol zugewiesenen Zadoff-Chu-Sequenz erhalten wird, generiert wird, und das RF-Band Phasensignal verschoben wird, wobei das so erhaltene RF-Signal über den Übertragungskanal übertragen wird.

8. Verfahren zum Übertragen von Daten in einer Vielzahl von Kommunikationen an oder von verschiedenen Nutzern, **dadurch gekennzeichnet, dass** die zu übertragenden Daten in K-näre Symbole umgewandelt werden, wobei die *K*-nären Symbole der verschiedenen Nutzer anhand des Verfahrens zum Modulieren nach einem der vorstehenden Ansprüche moduliert werden, wobei die Wurzeln der zum Modulieren der *K*-nären Symbole von zwei verschiedenen Nutzern verwendeten Zadoff-Chu-Sequenzen separat ausgewählt werden, und ihre Längen gleich einer gemeinsamen Länge ausgewählt werden.

9. Verfahren zum Übertragen von Daten nach Anspruch 8, **dadurch gekennzeichnet, dass** die zum Modulieren der *K*-nären Symbole von zwei separaten Nutzern verwendeten Wurzeln derart ausgewählt werden, dass der absolute Wert ihrer Differenz primär mit der gemeinsamen Länge ist.

10. Vorrichtung zum Modulieren, zum Modulieren einer Vielzahl von über einen Übertragungskanal zu übertragenden *K*-nären Symbolen, umfassend einen Binär-Dezimal-Wandler (110), der die *K* Bits eines jeden *K*-nären Symbols in einen separaten ganzen Wert umwandelt, und einen Zadoff-Chu-Sequenz-Generator (120), der als Eingangsparameter eine Sequenzlänge *N* und eine Wurzel *r*, wie *r* als ganze Zahl, r>1 und primär mit *N*, sowie einen Frequenz-Offset *q* aufweist, wobei *q* eine ganze Zahl ist, wobei der Generator für jedes *K*-näre Symbol eine Sequenz mit einer Länge größer oder gleich $2^K$ generiert, die durch komplexe Elemente einer Zadoff-Chu-Sequenz mit einer Länge *N,* einer Wurzel *r* und einem Frequenz-Offset q gleich dem ganzen Wert gebildet wird, der von dem Binär-Dezimal-Wandler bereitgestellt wird, wobei die Zadoff-Chu-Sequenz definiert wird als:

$$ZC_N^{r,q}(k) = e^{-j\frac{\pi}{N}r(k+1+2q)k}, k = 0, \ldots, N-1, wenn\ N\ ungerade\ ist \quad (1)$$

$$ZC_N^{r,q}(k) = e^{-j\frac{\pi}{N}r(k+2q)k}, k = 0, \ldots, N-1, wenn\ N\ gerade\ ist \quad (2)$$

wobei der Zadoff-Chu-Sequenz-Generator **dadurch gekennzeichnet ist, dass** er derart konfiguriert ist, dass zwei beliebigen *K*-nären Symbolen der Vielzahl Zadoff-Chu-Sequenzen zugewiesen sind, die separate Frequenz-Offsets aufweisen.

11. Verfahren zum Demodulieren eines Signals, das eine Frequenz-Offsetmodulierte Zadoff-Chu-Sequenz anhand eines Verfahrens zum Modulieren nach einem der Ansprüche 1 bis 7 darstellt, **dadurch gekennzeichnet, dass** das Signal basisband-angetastet wird, um eine Sequenz komplexer Abtastwerte bereitzustellen, die Sequenz komplexer Abtastwerte durch zyklische Korrelation (710) mit einer Bezugs-Zadoff-Chu-Sequenz korreliert wird, um ein zyklisches Korrelationsergebnis bereitzustellen, wobei die Zadoff-Chu-Sequenz definiert wird als:

$$ZC_N^{r,q}(k) = e^{-j\frac{\pi}{N}r(k+1+2q)k}, k = 0, \ldots, N-1, wenn\ N\ ungerade\ ist \quad (1)$$

$$ZC_N^{r,q}(k) = e^{-j\frac{\pi}{N}r(k+2q)k}, k = 0, \ldots, N-1, wenn\ N\ gerade\ ist \qquad (2)$$

wobei die die Zadoff-Chu-Sequenz eine Länge $N$, eine Wurzel $r$ und einen Frequenz-Offset q aufweist, wobei $N$ eine positive ganze Zahl, wie $\log_2 N \geq K$ ist, $r$ eine ganze Zahl, wie $r>1$ und primär mit $N$ ist, $q$ eine ganze Zahl ist, und die Zeitposition einer Korrelationsspitze in dem Modul des so erhaltenen zyklischen Korrelationsergebnisses erkannt (740) wird, und daraus ein Frequenz-Offset $\hat{q}$ abgeleitet wird, der dieser Zeitposition entspricht, wobei der Frequenz-Offset danach durch einen Dezimal-Binär-Wandler (750) in ein $K$-näres Symbol umgewandelt wird.

12. Vorrichtung zum Demodulieren eines Signals, das eine Frequenz-Offsetmodulierte Zadoff-Chu-Sequenz anhand eines Verfahrens zum Modulieren nach einem der Ansprüche 1 bis 7 darstellt, wobei das Signal basisband-angetastet wird, um einen ersten Block an komplexen Elementen der Größe $N$ bereitzustellen, **dadurch gekennzeichnet, dass** die Vorrichtung ein DFT-Modul (610) umfasst, das konfiguriert ist, um eine diskrete Fourier-Transformation der Größe N des ersten Blocks an komplexen Elementen durchzuführen, um einen ersten Block an komplexen Frequenzelementen bereitzustellen, einen Multiplikator (620), konfiguriert, um die komplexen Frequenzelemente des ersten Blocks Stück für Stück mit den komplexen Frequenzelementen eines zweiten Blocks zu multiplizieren, der durch komplexes Konjugieren einer diskreten Fourier-Transformation einer Bezugs-Zadoff-Chu-Sequenz erhalten wird, wobei die Zadoff-Chu-Sequenz definiert wird als:

$$ZC_N^{r,q}(k) = e^{-j\frac{\pi}{N}r(k+1+2q)k}, k = 0, \ldots, N-1, wenn\ N\ ungerade\ ist \qquad (1)$$

$$ZC_N^{r,q}(k) = e^{-j\frac{\pi}{N}r(k+2q)k}, k = 0, \ldots, N-1, wenn\ N\ gerade\ ist \qquad (2)$$

wobei die die Zadoff-Chu-Sequenz eine Länge $N$, eine Wurzel $r$ und einen Frequenz-Offset $q$ aufweist, wobei $N$ eine positive ganze Zahl, wie $\log_2 N \geq K$ ist, $r$ eine ganze Zahl, wie $r>1$ und primär mit $N$ ist, $q$ eine ganze Zahl ist, wobei die Vorrichtung weiter einen Modulrechner (630) umfasst, konfiguriert, um das Modul der Multiplikationsergebnisse der ersten und zweiten komplexen Frequenzelemente zu berechnen, einen Korrelationsspitzen-Detektor, konfiguriert, um die so erhaltenen Modul-Werte (640) zu vergleichen, um die Frequenzposition einer zyklischen Korrelationsspitze zu bestimmen, und den Frequenz-Offset, $q$, abzuleiten, der dieser Frequenzposition entspricht, und einen Dezimal-Binär-Wandler, konfiguriert, um den Frequenz-Offset in ein $K$-näres Symbol umzuwandeln.

13. Vorrichtung zum Demodulieren eines Signals, das eine Frequenz-Offsetmodulierte Zadoff-Chu-Sequenz anhand eines Verfahrens zum Modulieren nach einem der Ansprüche 1 bis 7 darstellt, wobei das Signal basisband-angetastet wird, um einen ersten Block an komplexen Elementen der Größe $N$ bereitzustellen, **dadurch gekennzeichnet, dass** sie einen zyklischen Korrelator (710) der Größe $N$ umfasst, um den ersten Block zyklisch mit einem zweiten Block zu korrelieren, wobei der zweite Block aus einer Bezugs-Zadoff-Chu-Sequenz besteht, wobei die Zadoff-Chu-Sequenz definiert wird als:

$$ZC_N^{r,q}(k) = e^{-j\frac{\pi}{N}r(k+1+2q)k}, k = 0, \ldots, N-1, wenn\ N\ ungerade\ ist \qquad (1)$$

$$ZC_N^{r,q}(k) = e^{-j\frac{\pi}{N}r(k+2q)k}, k = 0, \ldots, N-1, wenn\ N\ gerade\ ist \qquad (2)$$

wobei die die Zadoff-Chu-Sequenz eine Länge $N$, eine Wurzel r und einen Frequenz-Offset $q$ aufweist, wobei $N$ eine positive ganze Zahl, wie $\log_2 N \geq K$ ist, $r$ eine ganze Zahl, wie $r>1$ und primär mit $N$ ist, $q$ eine ganze Zahl ist, wobei die Vorrichtung weiter einen Modulrechner (730) umfasst, konfiguriert, um das Modul der zyklischen Korrelation zu berechnen, und einen Korrelationsspitzen-Detektor (740), konfiguriert, um aus diesem Modul die Zeitposition einer zyklischen Korrelationsspitze zu bestimmen, und konfiguriert, um einen Frequenz-Offset, $q$, abzuleiten, der dieser Zeitposition entspricht, und einen Dezimal-Binär-Wandler, konfiguriert, um den Frequenz-Offset in ein $K$-näres Symbol umzuwandeln.

14. Sender/Empfänger, **dadurch gekennzeichnet, dass** er mindestens eine Vorrichtung zum Modulieren nach Anspruch 10 und mindestens eine Vorrichtung zum Demodulieren nach einem der Ansprüche 12 oder 13 umfasst.

15. Sender/Empfänger nach Anspruch 14, **dadurch gekennzeichnet, dass** er eine Vielzahl von Vorrichtungen zum Modulieren nach Anspruch 10 umfasst, wobei jede Vorrichtung zum Modulieren der Vielzahl einem unterschiedlichen Wurzelwert entspricht, und/oder eine Vielzahl von Vorrichtungen zum Demodulieren zum Demodulieren nach einem der Ansprüche 12 oder 13, wobei jede Vorrichtung zum Demodulieren der Vielzahl einem unterschiedlichen Wurzelwert entspricht.

**Claims**

1. A method for modulating a plurality of *K*-ary symbols to be transmitted on a transmission channel, the method comprising:

   converting the k bits of each *K*-ary symbol into a distinct integer value, and generating a Zadoff-Chu sequence, associated with this symbol, said Zadoff-Chu sequence being defined as:

   $$ZC_N^{r,q}(k) = e^{-j\frac{\pi}{N}r(k+1+2q)k}, k = 0, \ldots, N-1 \; if \; N \; is \; odd \qquad (1)$$

   $$ZC_N^{r,q}(k) = e^{-j\frac{\pi}{N}r(k+2q)k}, k = 0, \ldots, N-1, f \; N \; is \; even \qquad (2)$$

   said Zadoff-Chu sequence being of length *N*, root *r* and frequency offset *q* where *N* is a positive integer such that $\log_2 N \geq K$, *r* is an integer such that *r* > 1 and prime with *N*, *q* is a relative integer, each *K*-ary symbol being modulated in the form of a sequence, of length greater than or equal to $2^K$, of consecutive complex elements of the Zadoff-Chu sequence of length *N*, root *r* and frequency offset *q* equal to said integer value associated with said *K*-ary symbol, said modulation method being **characterised in that** any two *K*-ary symbols of said plurality are associated with Zadoff-Chu sequences having distinct frequency offsets.

2. The modulation method according to claim 1, **characterised in that** the sequence of consecutive complex elements consists of all the elements of said Zadoff-Chu sequence.

3. The modulation method according to claim 2, **characterised in that** the length of the Zadoff-Chu sequence is equal to a power of 2.

4. The modulation method according to claim 1, **characterised in that** the length of said Zadoff-Chu sequence is chosen equal to the smallest prime number greaterthan $2^K$ and that the sequence of consecutive complex elements is obtained by truncating said Zadoff-Chu sequence with $2^K$ elements.

5. The modulation method according to one of claims 1 to 4, **characterised in that** the length of the Zadoff-Chu sequence is chosen greaterthan the difference between a maximum frequency offset for modulating the *K*-ary symbols and the time spread of the transmission channel, expressed in number of transmission periods of elements of this sequence.

6. The modulation method according to one of claims 1 to 5, **characterised in that** the real part and the imaginary part of the elements of the sequence of consecutive complex elements of a Zadoff-Chu sequence associated with a *K*-ary symbol respectively modulate two carriers in quadrature and that the modulated signal thus obtained is transmitted on the transmission channel.

7. The modulation method according to one of claims 1 to 5, **characterised in that** a baseband phase signal is generated, obtained as the phase of the consecutive complex elements of the Zadoff-Chu sequence associated with a *K*-ary symbol, and that the phase signal is translated into the RF band, the RF signal thus obtained being transmitted on the transmission channel.

8. A method for transmitting data on a plurality of communications to or from different users, **characterised in that** the data to be transmitted are transformed into *K*-ary symbols, the *K*-ary symbols of the different users being modulated by means of the modulation method according to one of the preceding claims, the roots of the Zadoff-Chu sequences used to modulate the *K*-ary symbols of two distinct users being chosen to be distinct and their lengths chosen to be equal to a common length.

9. The data transmission method according to claim 8, **characterised in that** the roots used to modulate the $K$-ary symbols of two distinct users are chosen such that the absolute value of their difference is prime with said common length.

10. A modulation device for modulating a plurality of $K$-ary symbols to be transmitted on a transmission channel, comprising a binary to decimal converter (110) transforming the $K$ bits of each $K$-ary symbol into a distinct integer value, and a generator of Zadoff-Chu sequences (120), having as input parameters a sequence length $N$ and a root $r$ such that $r$ is an integer, $r > 1$ and prime with $N$, as well as a frequency offset, $q$, $q$ being a relative integer, said generator generating, for each $K$-ary symbol, a sequence of length greater than or equal to $2^K$, formed by complex elements of a Zadoff-Chu sequence of length $N$, root $r$ and frequency offset q equal to the integer value provided by said binary to decimal converter, said Zadoff-Chu sequence being defined as:

$$ZC_N^{r,q}(k) = e^{-j\frac{\pi}{N}r(k+1+2q)k}, k = 0, \dots, N-1 \; if \; N \; is \; odd \qquad (1)$$

$$ZC_N^{r,q}(k) = e^{-j\frac{\pi}{N}r(k+2q)k}, k = 0, \dots, N-1, f \; N \; is \; even \qquad (2)$$

said generator of Zadoff-Chu sequences being **characterised in that** it is configured such that any two $K$-ary symbols of said plurality are associated with Zadoff-Chu sequences having distinct frequency offsets.

11. A method for demodulating a signal representing a Zadoff-Chu sequence modulated in frequency offset by means of a modulation method according to one of claims 1 to 7, **characterised in that** said signal is sampled in frequency baseband to provide a sequence of complex samples, that said sequence of complex samples is correlated by cyclic correlation (710) with a reference Zadoff-Chu sequence to provide a cyclic correlation result, said Zadoff-Chu sequence being defined as:

$$ZC_N^{r,q}(k) = e^{-j\frac{\pi}{N}r(k+1+2q)k}, k = 0, \dots, N-1 \; if \; N \; is \; odd \qquad (1)$$

$$ZC_N^{r,q}(k) = e^{-j\frac{\pi}{N}r(k+2q)k}, k = 0, \dots, N-1, f \; N \; is \; even \qquad (2)$$

said Zadoff-Chu sequence being of length $N$, root $r$ and frequency offset $q$ where $N$ is a positive integer such that $\log_2 N \geq K$, $r$ is an integer such that $r > 1$ and prime with $N$, $q$ is a relative integer, and that the temporal position of a correlation peak is detected (740) in the module of the cyclic correlation result thus obtained, and that a frequency offset is deduced therefrom, $\hat{q}$ corresponding to this temporal position, said frequency offset then being converted by a decimal to binary converter (750) into a $K$-ary symbol.

12. A device for demodulating a signal representing a Zadoff-Chu sequence modulated in frequency offset by means of a modulation method according to one of claims 1 to 7, said signal is sampled in baseband to provide a first block of complex elements of size $N$, **characterised in that** said device comprises a DFT module (610) configured to perform a discrete Fourier transform of size $N$ of the first block of complex elements to provide a first block of complex frequency elements, a multiplier (620) configured to multiply term by term the complex frequency elements of the first block with the complex frequency elements of a second block obtained by complex conjugation of a discrete Fourier transform of a reference Zadoff-Chu sequence, said Zadoff-Chu sequence being defined as:

$$ZC_N^{r,q}(k) = e^{-j\frac{\pi}{N}r(k+1+2q)k}, k = 0, \dots, N-1 \; if \; N \; is \; odd \qquad (1)$$

$$ZC_N^{r,q}(k) = e^{-j\frac{\pi}{N}r(k+2q)k}, k = 0, \dots, N-1, f \; N \; is \; even \qquad (2)$$

said Zadoff-Chu sequence being of length $N$, root $r$ and frequency offset $q$ where $N$ is a positive integer such that $\log_2 N \geq K$, $r$ is an integer such that $r > 1$ and prime with $N$, $q$ is a relative integer, said device further comprising a modulus calculator (630) configured to calculate the modulus of the multiplication results of the first and second complex frequency elements, a correlation peak detector configured to compare the modulus values thus obtained (640) for determining the frequency position of a cyclic correlation peak, and deducing the frequency offset, $q$,

corresponding to this frequency position, and a decimal to binary converter configured to convert said frequency offset into a *K*-ary symbol.

13. The device for demodulating a signal representing a Zadoff-Chu sequence modulated in frequency offset by means of a modulation method according to one of claims 1 to 7, said signal is sampled in baseband to provide a first block of complex elements of size *N*, **characterised in that** it comprises a cyclic correlator (710) of size *N* for cyclically correlating said first block with a second block, said second block consisting of a reference Zadoff-Chu sequence, said Zadoff-Chu sequence being defined as:

$$ZC_N^{r,q}(k) = e^{-j\frac{\pi}{N}r(k+1+2q)k}, k = 0, \dots, N-1 \; if \; N \; is \; odd \qquad (1)$$

$$ZC_N^{r,q}(k) = e^{-j\frac{\pi}{N}r(k+2q)k}, k = 0, \dots, N-1, f \; N \; is \; even \qquad (2)$$

said Zadoff-Chu sequence being of length *N*, root *r* and frequency offset *q* where *N* is a positive integer such that $\log_2 N \geq K$, *r* is an integer such that *r* > 1 and prime with *N*, *q* is a relative integer, said device further comprising a modulus calculator (730) configured to calculate the modulus of said cyclic correlation and a correlation peak detector (740) configured to determine, from this module, the temporal position of a cyclic correlation peak and configured to deduce a frequency offset, q corresponding to this temporal position, and a decimal to binary converter configured to convert said frequency offset into a *K*-ary symbol.

14. An emitter/receiver **characterised in that** it comprises at least one modulation device according to claim 10 and at least one demodulation device according to one of claims 12 or 13.

15. The emitter/receiver according to claim 14, **characterised in that** it comprises a plurality of modulation devices according to claim 10, each modulation device of said plurality corresponding to a different root value, and/or a plurality of demodulation devices according to one of claims 12 or 13, each demodulation device of said plurality corresponding to a different root value.

**Fig. 1**

z(N=17,r=4,q=0)

Fig. 2A

z(N=17,r=4,q=1)

Fig. 2B

Fig. 3A

Fig. 3B

Fig. 3C

410 420

Trame

Préambule pour
détection et synchronisation

Charge utile
(Incluant optionnellement en-tête de contrôle et CRC)

| $ZC_N^{r,q0}$ | $ZC_N^{r,q0}$ | $ZC_N^{r,q0}$ | $ZC_N^{r,q1}$ | $ZC_N^{r,q2}$ | - - - - | $ZC_N^{r,qi}$ | $ZC_N^{r,q(i+1)}$ |

Séquence pilote
Zadoff-Chu

Séquence
Zadoff-Chu

Temps

**Fig. 4**

| CC(1) | CC(2) | CC(3) | ... | CC(M) | M Echantillons de code de couverture |

\* \* \* \*

| Synchro symbol 1 | Synchro symbol 2 | Synchro symbol 3 | ... | Synchro symbol M | M Symbole ZC de synchronisation |

Séquence de N
échantillons ZC

**Fig. 5**

610      620      630      640      650

600

Symbole Rx ⟶ | FFT | ⟶ N ⟶ (X) ⟶ N ⟶ | | | ⟶ N ⟶ | Détecteur de pic | ⟶ 1 ⟶ | démodulation symbole à bits | ⟶ K ⟶ Bits reçus

605      615      625

| Générateur Zadoff-Chu | ⟶ | FFT | ⟶ | CONJ | ⟶ N

Ref. Offset q0    Racine    Longueur N

Configuration du récepteur

**Fig. 6**

710   730   740   750   700

Symbole Rx → | corr. cycl | → | ·| | → | Détecteur de pic | → | démodulation symbole à bits | →

705

$q_0$ → | générateur de Zadoff-Chu |

$r$   $N$

**Fig. 7**

EP 3 931 991 B1

**Fig. 8**

25

**Fig. 9**

1020

1025

1040

1010

Tx
bits

modulateur
ZC

traitement
du signal
en bande
de base
(conversion
en polaire)

Enveloppe

Correction
de retard

Modulateur
d'enveloppe

1070

Phase

modulateur
de phase

Mélangeur RF

1030

1050

1060

synthétiseur
de fréquence
(XO/PLL)

**Fig. 10**

## RÉFÉRENCES CITÉES DANS LA DESCRIPTION

**Documents brevets cités dans la description**

- US 20120207118 A

**Littérature non-brevet citée dans la description**

- **D. CROCE et al.** Impact of LoRa imperfect orthogonality : analysis of link-level performance. *IEEE Communication Letters,* Avril 2018, vol. 22 (4), 796-799
- **R. KRENZ et al.** Hybrid DS/FH spread spectrum data transmission system for telemetry. *Proc of 10th Int'l Symposium on communication systems, networks and digital signal processing (CSNDSP), IEEE,* 20 Juillet 2016, 1-5
- **D.C. CHU.** Polyphase codes with good corrélation properties. *IEEE Trans. Inform. Theory,* Juillet 1972, vol. IT-18, 531-532
- **D.V. SARWATE.** Bounds on crosscorrelation and autocorrelation of sequences. *IEEE Trans. on Information Theory,* Novembre 1979, vol. IT-25 (6), 720-724
- preamble sequence génération. *3GPP TS 36.211, 9 5.7.2*